(19) Europäisches Patentamt
European Patent Office
Office européen des brevets

(11) EP 2 485 824 B1

(12) # EUROPÄISCHE PATENTSCHRIFT

(45) Veröffentlichungstag und Bekanntmachung des Hinweises auf die Patenterteilung:
**04.03.2015 Patentblatt 2015/10**

(21) Anmeldenummer: **10759654.6**

(22) Anmeldetag: **29.09.2010**

(51) Int Cl.:
***B01D 19/04*** (2006.01) ***D21H 21/12*** (2006.01)

(86) Internationale Anmeldenummer:
**PCT/EP2010/064466**

(87) Internationale Veröffentlichungsnummer:
**WO 2011/042342 (14.04.2011 Gazette 2011/15)**

(54) **VERFAHREN ZUM ENTLÜFTEN VON FLÜSSIGKEITEN**

METHOD FOR DEAERATING LIQUIDS

PROCÉDÉ PERMETTANT DE DÉGAZER DES LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **06.10.2009 DE 102009045365**

(43) Veröffentlichungstag der Anmeldung:
**15.08.2012 Patentblatt 2012/33**

(73) Patentinhaber: **Wacker Chemie AG**
**81737 München (DE)**

(72) Erfinder:
- **BURGER, Willibald**
  **84489 Burghausen (DE)**
- **ESTERBAUER, Ludwig**
  **84539 Ampfing (DE)**
- **RAUTSCHEK, Holger**
  **01612 Nünchritz (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 0 663 225** **EP-A1- 1 076 073**
**EP-A1- 1 634 940** **EP-A2- 1 424 117**
**WO-A1-2006/128624** **DE-A1- 19 918 361**
**US-A- 6 162 330**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Entlüftung von Flüssigkeiten, insbesondere zur Entlüftung wässriger Suspensionen, wie sie z. B. bei der Textilbehandlung oder Zellstoff- und Papierherstellung anfallen.

In vielen flüssigen, insbesondere wässrigen Systemen, die als erwünschte oder auch unerwünschte Bestandteile oberflächenaktive Verbindungen enthalten, können Probleme mit eingeschlossenen Luftblasen auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen. Insbesondere Flüssigkeiten, die fein verteilte Partikel wie z. B. Fasern enthalten, an denen sich Luftblasen anlagern können, neigen dazu Luft einzuschließen.

Bei der Zellstoffherstellung verhindert die eingeschlossene Luft z. B. eine schnelle Drainage des Wassers und senkt somit Qualität und Produktivität.

Herkömmliche Entschäumer sind bekanntermaßen für die Bekämpfung von "trockenem" Oberflächenschaum geeignet, bei dem große Gasblasen durch dünne Flüssigkeitsfilme getrennt sind (wie in Langmuir 2004, 20, 9463-9505 beschrieben). Ihre Wirksamkeit zur Entlüftung von Flüssigkeit-Gas-Mischungen, die zum größten Teil aus Flüssigkeit gegebenenfalls mit suspendierten Feststoffen bestehen, ist jedoch nicht gegeben.

Das liegt daran, dass die Oberflächeneigenschaften und die Löslichkeit von Entschäumern, die den Oberflächenschaum, der auch als Makroschaum bezeichnet wird, zerstören, sich notwendigerweise von den Eigenschaften von Entlüftern unterscheiden (siehe Adams, J. W. et al. Verfkroniek, 68 (10) 1996 S. 43-45). Entschäumer müssen unverträglich sein und schnell an die Oberfläche wandern. Entlüfter, die dagegen den Mikroschaum bekämpfen sollen, müssen besser verträglich sein, da sie nicht an der Oberfläche sondern in der flüssigen Phase wirken sollen. Deshalb ist es nicht möglich von einer guten Entschäumerwirkung auf eine Entlüfterwirkung zu schließen (vgl. EP 257 356 B1, Seite 2, Zeilen 28-31).

Deshalb werden spezielle Formulierungen für diese Anwendungen vorgeschlagen. GB 2 350 117 A schlägt zur besseren Entlüftung vor lineare oder cyclische Siloxane zu verwenden, die Si-C oder Si-O-C gebundene Polyethergruppen tragen. EP 257 356 B1 beansprucht Siloxane mit (Isobutyryloxy)isopropyldimethylpropoxygruppen die eine bessere Entlüftung von Plastisolen ermöglichen sollen als Polyethersiloxane.

In WO 2006/128624 A1, EP 1 424 117 A2 und EP 1 076 073 A1 sind Entschäumerformulierungen enthaltend

(A) Antischaummittel auf der Basis von Siloxanen und
(B) Polyether-Polysiloxan-Copolymere beschrieben.

DE 199 18 361 A1 offenbart flüssige Polyether-Polysiloxan-Copolymere, in welchen die Verzweigungs- und Vernetzungsstellen Si-C-Bindungen sind, deren Herstellung und Verwendung als Entschäumer.

Es besteht weiterhin der Bedarf nach besseren Entlüftungsmitteln für verschiedene Anwendungen, insbesondere für die Herstellung von Zellstoff.

Überraschenderweise wurde gefunden, dass spezielle verzweigte Polyether-Polysiloxan-Copolymere eine überlegene Entlüftungswirkung aufweisen.

Gegenstand der Erfindung ist ein Verfahren zum Entlüften von Flüssigkeiten durch Zugabe von 0,0001 bis 5,0 Gew.-%, vorzugsweise 0,0002 - 1,0 Gew.-%, besonders bevorzugt 0,001-0,2 Gew.-%, verzweigten Polyether-Polysiloxan-Copolymeren zu diesen Flüssigkeiten, wobei als verzweigte Polyether-Polysiloxan-Copolymere solche eingesetzt werden, bei denen die Polyetherreste an lineare Siloxanketten über Kohlenwasserstoffreste, vorzugsweise zweiwertige Kohlenwasserstoffreste, SiC-gebunden sind und diese Siloxanketten über SiC-gebundene zwei- bis zehnwertige, bevorzugt zwei- bis vierwertige, Kohlenwasserstoffreste, die ein oder mehrere Heteroatome ausgewählt aus der Gruppe der Sauerstoff- und Stickstoffatome enthalten können, miteinander verbunden sind.

Als erfindungsgemäße verzweigte Polyether-Polysiloxan-Copolymere werden vorzugsweise solche eingesetzt, bei denen die linearen Siloxanketten über seitenständige lineare oder verzweigte SiC-gebundene organische Reste, vorzugsweise lineare SiC-gebundene organische Reste, miteinander verbunden sind oder bei denen die linearen Siloxanketten endständig über verzweigte organische Reste miteinander verbunden sind.

Beispiele für organische Reste, bei denen die linearen Siloxanketten über seitenständige lineare oder verzweigte SiC-gebundene organische Reste miteinander verbunden sind, sind SiC-gebundene zweiwertige Kohlenwasserstoffreste, wie Alkylenreste, SiC-gebundene Polyetherreste, die über zweiwertige Kohlenwasserstoffreste, wie Alkylenreste, an die Siloxanketten gebunden sind, und SiC-gebundene zweiwertige Kohlenwasserstoffreste, wie Alkylenreste, die Polyether- und Urethangruppen enthalten.

Beispiele für organische Reste, bei denen die linearen Siloxanketten endständig über verzweigte organische Reste miteinander verbunden sind, sind SiC-gebundene verzweigte dreiwertige Kohlenwasserstoffreste, wie ein Rest der Formel

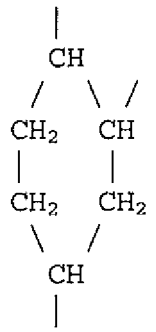

Die erfindungsgemäßen Polyether-Polysiloxan-Copolymere besitzen eine Viskosität von vorzugsweise 100 bis 100 000 000 mPa·s bei 25°C, bevorzugt 1 000 bis 1 000 000 mPa·s bei 25°C und besonders bevorzugt 1 000 bis 100 000 mPa·s bei 25°C.

Als verzweigte Polyether-Polysiloxan-Copolymere werden vorzugsweise solche Copolymere (B1) eingesetzt, die herstellbar sind, indem in einem ersten Schritt lineare Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel

$$R^1\text{-}(O\text{-}C_nH_{2n})_m\text{-}A^1\text{-}H \qquad (I),$$

wobei $R^1$ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,

$A^1$ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet), vorzugsweise ein Sauerstoffatom -O-, bedeutet,

n eine ganze Zahl von 1 bis 20, vorzugsweise 1 bis 4, bevorzugt 2 oder 3, ist und

m eine ganze positive Zahl, vorzugsweise 5 bis 50, ist, umgesetzt werden,

und in einem zweiten Schritt

die so erhaltenen $H\text{-}A^1$-Gruppen aufweisenden Zwischenprodukte (4) mit organischen Verbindungen (5), die pro Molekül mindestens zwei Isocyanatgruppen aufweisen, umgesetzt werden, mit der Maßgabe, dass der Wassergehalt der zur Herstellung der Polysiloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Bei den erfindungsgemäß eingesetzten verzweigten Polyether-Polysiloxan-Copolymere (B1) sind die linearen Siloxanketten, über seitenständige lineare oder verzweigte organische Reste, vorzugsweise lineare organische Reste, miteinander verbunden, wobei die organischen Reste SiC-gebundene zweiwertige Kohlenwasserstoffreste, wie Alkylenreste, sind, die Polyether- und Urethangruppen enthalten.

Bevorzugt werden als Organopolysiloxane (1) solche der allgemeinen Formel

$$H_gR_{3-g}SiO(SiR_2O)_o(SiRHO)_pSiR_{3-g}H_g \qquad (III)$$

wobei R gleich oder verschieden sein kann und einen einwertigen, gegebenenfalls halogenierten Kohlenwasserstoffrest mit 1 bis 18 Kohlenstoffatomen je Rest bedeutet,

g 0, 1 oder 2,

o 0 oder eine ganze Zahl von 1 bis 1500 und

p eine ganze Zahl von 1 bis 200 ist,

mit der Maßgabe, dass pro Molekül mindestens ein Si-gebundenes Wasserstoffatom, bevorzugt mindestens zwei Si-gebundene Wasserstoffatome, vorliegen, verwendet.

Bevorzugt ist g in Formel (III) 0 und p in Formel (III) 2 bis 50, besonders bevorzugt 3-20, insbesondere 5-10, und es werden als Organopolysiloxane (1) vorzugsweise Copolymerisate aus Hydrogenalkylsiloxy- und Dialkylsiloxyeinheiten, insbesondere Copolymerisate aus Hydrogenmethylsiloxy- und Dimethylsiloxyeinheiten eingesetzt.

Beispiele für Reste R sind Alkylreste, wie der Methyl-, Ethyl-, n-Propyl-, iso-Propyl-, 1-n-Butyl-, 2-n-Butyl-, iso-Butyl-, tert, -Butyl-, n-Pentyl-, iso-Pentyl-, neo-Pentyl-, tert, -Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der $\alpha$- und der $\beta$-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste $R^1$ sind Alkenylreste, wie der vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest $R^1$ um einen Alkenylreste, insbesondere $\omega$-Alkenylrest, wobei der Allylrest besonders bevorzugt ist,

Bevorzugt als oligomere oder polymere Verbindungen (2) sind Polyether der allgemeinen Formel

$$H_2C=CH-R^2-(OC_nH_{2n})_m-OH \qquad (IV),$$

wobei $R^2$ ein zweiwertiger Kohlenwasserstoffrest mit 1 bis 10 Kohlenstoffatomen, bevorzugt ein Rest der Formel $-CH_2-$, $-CH(CH_3)-$ oder $-C(CH_3)_2-$ ist und

n und m die oben dafür angegebene Bedeutung haben.

Bevorzugte Beispiele für Polyether (2) sind solche der allgemeinen Formel

$$H_2C=CH-R^3-(OCH_2CH_2)_a[OCH_2CH(CH_3)]_b-OH \qquad (IV'),$$

wobei $R^2$ die oben dafür angegebene Bedeutung hat und a und b 0 oder eine ganze Zahl von 1 bis 200 ist, vorzugsweise 5 bis 50 ist.

Die Verbindungen (2) werden im ersten Verfahrensschritt vorzugsweise in Mengen von 1,0 bis 4,0, bevorzugt 1,3 bis 2,5 Mol Rest $R^1$, der vorzugsweise ein Rest mit aliphatischer C-C-Mehrfachbindung ist, bevorzugt ein $\omega$-Alkenylrest ist, je Mol Si-gebundenem Wasserstoff im Organopolysiloxan (1) eingesetzt.

Im ersten Verfahrensschritt werden vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtC14, H2PtCl6*6H2O, Na2PtCl4*4H2O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H2PtCl6*6H2O und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe,

Der Katalysator (3) wird im ersten Verfahrensschritt vorzugsweise in Mengen von 1 bis 50 Gew.-ppm (Gewichststeilen je Million Gewichtsteilen), bevorzugt in Mengen von 2 bis 20 Gew.-ppm, jeweils berechnet als elementares Platin und bezogen auf das Gesamtgewicht der Organopolysiloxane (1) und Verbindungen (2) eingesetzt.

Der erste Verfahrensschritt wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird der erste Verfahrensschritt vorzugsweise bei einer Temperatur von 60°C bis 140°C, bevorzugt 80°C bis 120°C, durchgeführt.

Im zweiten Verfahrensschritt werden als organische Verbindungen (5), die pro Molekül mindestens zwei Isocyanatgruppen aufweisen, bevorzugt Diisocyanate der allgemeinen Formel

$$O=C=N-R^3-N=C=O \qquad (V),$$

wobei $R^3$ einen zweiwertigen Kohlenwasserstoffrest mit 4 bis 40 Kohlenstoffatomen je Rest bedeutet, eingesetzt.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt vorzugsweise in Mengen von 0,1 bis 0,9 Mol, bevorzugt 0,2 bis 0,7 Mol, Isocyanatgruppe je Mol $H-A^1$-Gruppe im zwischenprodukt (4) eingesetzt.

Für die Umsetzung im zweiten Schritt des erfindungsgemäßen Verfahrens werden vorzugsweise Kondensationskatalysatoren (6), wie Di-n-butylzinndilaurat, Zinn-II-octoat, Dibutylzinndiacetat, Kaliumoctoat oder tert. Amine, wie Dimethylcyclohexylamin, Dimethylaminopropyldipropanolamin, Pentamethyldipropylentriamin, N-Methylimidazol oder N-Ethylmorpholin, eingesetzt.

Ein bevorzugtes Polysiloxancopolymer wird erhalten, indem im ersten Verfahrensschritt ein methylterminiertes hydrogenfunktionelles Polysiloxan (1), das seitenständig Sigebundene Wasserstoffatome aufweist, mit einem Überschuss an Polyether (2) der Formel (IV) umgesetzt wird und im zweiten Verfahrensschritt das Zwischenprodukt (4), ein Siliconpolyether mit Kammstruktur, mit einem Diisocyanat (5) der Formel (V) umgesetzt wird, wobei Urethan-Gruppen in das Polysiloxancopolymer eingeführt werden. Auch freier Polyether aus dem 1. Schritt wird dabei durch Urethanbildung gebunden.

Im zweiten Schritt des erfindungsgemäßen Verfahrens können zusätzlich zu den organischen Verbindungen (5) noch weitere Verbindungen (7), die gegenüber Isocyanatgruppen reaktiv sind, eingesetzt werden.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 40°C bis 160°C, bevorzugt 80°C bis 140°C, durchgeführt.

Zur Erniedrigung der teilweise sehr hohen Produktviskositäten können gegebenenfalls niedermolekulare Stoffe, wie Alkohole oder Ether zugesetzt werden.

Die Polyether-Polysiloxan-Copolymere (B1) und deren Herstellung sind in WO 2006/128624 A1, insbesondere auf Seite 3, Zeile 8 bis Seite 13, Zeile 38, beschrieben.

Als verzweigte Polyether-Polysiloxan-Copolymere werden vorzugsweise solche Copolymere (B2) eingesetzt, enthaltend Strukturelemente der allgemeinen Formel

$$Y[-C_{n'}H_{2n'}-(R_2SiO)_{m'}-A'_{p'}-R_2Si-G]_{x'} \qquad (I'),$$

wobei

- Y einen drei- bis zehnwertigen, vorzugsweise drei- bis vierwertigen, Kohlenwasserstoffrest, der ein oder mehrere Heteroatome ausgewählt aus der Gruppe der Sauerstoff- und Stickstoffatome enthalten kann, bedeutet,
- R die oben dafür angegebene Bedeutung hat,
- A' einen Rest der Formel $-R_2Si-R^{2'}-(R_2SiO)_{m'}$-bedeutet,
  wobei $R^{2'}$ ein zweiwertiger Kohlenwasserstoffrest mit 2 bis 30 Kohlenstoffatomen, der durch ein oder mehrere voneinander separate Sauerstoffatome, vorzugsweise 1 bis 4 voneinander separate Sauerstoffatome, unterbrochen sein kann, bedeutet,
- G einen einwertigen Rest der Formel $-C_{f'}H_{2f'-2k'}-Z$ oder einen zweiwertigen Rest der Formel $-C_{n'}H_{2n'}-$, wobei die zweite Bindung an einen weiteren Rest Y erfolgt, bedeutet,
- Z einen Rest der Formel
  $-(R^{6'})_{v'}-(OCH_2CH_2)_{a'}[OCH_2CH(CH_3)]_{b'}[OCH_2CH(CH_2CH_3)]_{c'}-OR^{3'}$, wobei $R^{3'}$ ein Wasserstoffatom oder einen Kohlenwasserstoffrest mit 1 bis 18 Kohlenstoffatomen oder einen Rest der Formel R-C(O)- (wobei R die oben dafür angegebene Bedeutung hat) bedeutet,
  $R^{6'}$ einen zweiwertigen Kohlenwasserstoffrest mit 1 bis 10 Kohlenstoffatomen bedeutet und
  v' 0 oder 1, vorzugsweise 1, ist, und
  a', b' und c' 0 oder eine ganze Zahl zwischen 1 und 1000 ist, c' vorzugsweise 0 ist,
  mit der Maßgabe, dass die Summe aus (a'+b'+c') einen Wert von 2 bis 2000, vorzugsweise 2 bis 200, bevorzugt 2 bis 150, hat,
  x' eine ganze Zahl von 3 bis 10, vorzugsweise 3 oder 4, ist,
- f' eine ganze Zahl von 2 bis 12, vorzugsweise 2, ist,
- k' 0 oder 1, vorzugsweise 0, ist,
- n' eine ganze Zahl von 2 bis 12, vorzugsweise 2, ist,
- m' eine ganze Zahl von mindestens 1, vorzugsweise eine ganze Zahl von 1 bis 1000, ist und
- p' 0 oder eine ganze positive Zahl, vorzugsweise 0 oder eine ganze Zahl von 1 bis 20, ist,

mit der Maßgabe, dass die verzweigten Polyether-Polysiloxan-Copolymere (B2) durchschnittlich mindestens eine Gruppe Z enthalten.

Die Herstellung der verzweigten Polyether-Polysiloxan-Copolymere (B2) der allgemeinen Formel (I') erfolgt vorzugsweise indem in einem ersten Schritt mindestens drei aliphatische Doppelbindungen aufweisende Verbindungen (1') der Formel

$$Y(CR^{1'}=CH_2)_{x'}$$

wobei Y und x' die oben dafür angegebene Bedeutung haben und $R^{1'}$ ein Wasserstoffatom oder einen Alkylrest mit 1 bis 10 Kohlenstoffatomen, bevorzugt ein Wasserstoffatom, bedeutet, mit Organopolysiloxanen (2') der allgemeinen Formel

$$H(R_2SiO)_{m'}-A'_{p'}-R_2SiH$$

wobei A', R, m' und p' die oben dafür angegebene Bedeutung haben,
in Gegenwart von die Anlagerung von Si-gebundenem Wasserstoff an aliphatische Mehrfachbindung fördernden Katalysatoren (3'), sogenanntem Hydrosilylierungskatalysator,
umgesetzt werden,
und in einem zweiten Schritt die so erhaltenen Si-gebundene Wasserstoffatome aufweisenden verzweigten zwischenprodukte (5') mit organischen Verbindungen (4') der Formel

$$C_{f'}H_{2f'-2k'-1}-Z$$

ausgewählt aus der Gruppe von
wenn k'=0: $H_2C=CR^{4'}-Z$ (4a') und
wenn k'=1: $R^{5'}C\equiv C-Z$ (4b')
wobei $R^{4'}$ und $R^{5'}$ die Bedeutung von $R^{1'}$ haben, bevorzugt ein Wasserstoffatom bedeuten,
f', k' und Z die oben angegebene Bedeutung haben,
in Gegenwart von die Anlagerung von Si-gebundenem Wasserstoff an aliphatische Mehrfachbindung fördernden Katalysatoren (3'), umgesetzt werden.

Bevorzugt ist k' 0 und organische Verbindungen (4a') sind daher bevorzugt.

Die erfindungsgemäß eingesetzten Polyether-Polysiloxan-Copolymere (B2) mit verzweigter Struktur enthalten grundsätzlich kettenartige Siloxanblöcke, deren Enden über jeweils eine $C_{n'}H_{2n'}$- oder $C_{f'}H_{2f'-2k'}$-Brücke mit den Strukturelementen Y bzw. Z verbunden sind. Je mehr Siloxanblöcke beidseitig mit Elementen Y verbunden sind, umso verzweigter sind die erzeugten Produkte. Generell sind die erfindungsgemäßen Polyether-Polysiloxan-Copolymere (B2) so aufgebaut, dass Siloxanblöcke und organische Blöcke miteinander abwechseln, wobei die Verzweigungsstrukturen und die Enden aus organischen Blöcken bestehen.
In den Polyether-Polysiloxan-Copolymeren (B2) beträgt das Verhältnis von Endgruppen Z zu Verzweigungsgruppen Y (Z/Y-Verhältnis) vorzugsweise 1,0 bis 2,0, bevorzugt 1,1 bis 1,5.

Beispiele für Reste R sind oben beschrieben.

Beispiele für Kohlenwasserstoffreste R mit 1 bis 10 Kohlenstoffatomen gelten auch für Kohlenwasserstoffreste $R^{1'}$, $R^{4'}$ und $R^{5'}$.

Beispiele für Kohlenwasserstoffreste R mit 1 bis 18 Kohlenstoffatomen gelten auch für Kohlenwasserstoffreste $R^{3'}$

Bevorzugt ist $R^{3'}$ ein Wasserstoffatom, ein Methyl-, ein n-Butyl- oder ein Acetylrest.

Bevorzugt ist der Rest $R^{6'}$ ein Rest der Formel $-(CH_2)-$.

Im ersten Verfahrensschritt führt die Addition der SiH-Gruppe von (2') an die $CH_2=CR^{1'}$-Gruppe von (1'), die sogenannte Hydrosilylierung, zur dem Fachmann bekannten Bildung von zwei Isomeren.

Die $-C_{n'}H_{2n'}$-Gruppe in (I') der erfindungsgemäßen Copolymere (B2) umfasst diese Isomerenbildung und bedeutet daher vorzugsweise die isomeren Reste

$-CHR^{1'}-CH_2-$ von (i)

und

$-CR^{1'}-CH_3$ von (ii)

und n' ist daher die Gesamtzahl der C-atome in der $CH_2=CR^{1'}$-Gruppe von (1'). Da $R^{1'}$ vorzugsweise ein Wasserstoffatom

ist, ist n' vorzugsweise 2.

Beispiele für Verbindungen (1') sind
1,24-Trivinylcyclohexan,
1,3,5-Trivinylcyclohexan,
3,5-Dimethyl-4-vinyl-1,6-heptadien,
1,2,3,4-Tetravinylcyclobutan,
Methyltrivinylsilan,
Tetravinylsilan,
1,1,2,2-Tetraallyloxyethan,
wobei 1,2,4-Trivinylcyclohexan bevorzugt ist.

Bevorzugt ist daher als Rest Y ein Rest der Formel

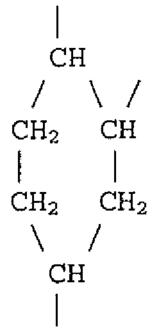

.

Als Organopolysiloxan (2') wird ein weitgehend lineares Polymer eingesetzt.

p' ist bevorzugt 0.
m' ist bevorzugt eine ganze Zahl von 5 bis 400.

Organopolysiloxan (2') wird im ersten Verfahrensschritt in solchen Mengen eingesetzt, dass das Verhältnis von Si-gebundenem Wasserstoff in Organopolysiloxan (2') zu aliphatischer Doppelbindung in Verbindung (1') vorzugsweise mindestens 1,5, bevorzugt 1,5 bis 20, besonders bevorzugt 1,5 bis 5,0, beträgt.

Da Organopolysiloxan (2') vorzugsweise im Überschuss eingesetzt wird, reagieren daher in dem ersten Verfahrensschritt alle aliphatischen Doppelbindungen in der Verbindung (1') ab, und es werden verzweigte Zwischenprodukte (5') erhalten, die Sigebundene Wasserstoffatome aufweisen.

Als die Anlagerung von Si-gebundenem Wasserstoff an aliphatische Mehrfachbindung fördernde Katalysatoren (3') können die o. g. Katalysatoren (3) eingesetzt werden.
Der Katalysator (3') wird im ersten Verfahrensschritt vorzugsweise in Mengen von 0,2 bis 20 Gew.-ppm (Gewichtsteilen je Million Gewichtsteilen), bevorzugt in Mengen von 1 bis 10 Gew.-ppm, jeweils berechnet als elementares Platin und bezogen auf das Gesamtgewicht von Verbindung (1') und Organopolysiloxan (2') eingesetzt.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 100°C, durchgeführt.

In dem ersten wie auch im zweiten Verfahrensschritt können vorzugsweise inerte, organische Lösungsmittel mitverwendet werden. Beispiele für inerte, organische Lösungsmittel sind Toluol, Xylol, Octanisomere, Heptanisomere, Butylacetat, 1,2-Dimethoxyethan, Tetrahydrofuran und Cyclohexan.

Die organischen Verbindungen (4') enthalten aliphatische C-C-Doppel- oder Dreifachbindungen, die gegenüber Si-H-Gruppen in Hydrosilylierungsreaktionen reaktiv sind und diese unter Bildung von Si-C-Bindungen anlagern. Die Verbindung (4a') ist bevorzugt.

Bei der Anlagerung der SiH-Gruppe in dem Zwischenprodukt (5') an die Doppel- oder Dreifachbindung in (4a') oder (4b') kommt es zur dem Fachmann bekannten Bildung von Isomeren.

Die $-C_fH_{2f-2k'}$-Gruppe in Formel (I') der erfindungsgemäßen Polyether-Polysiloxan-Copolymere (B2) umfasst diese Isomerenbildung und bedeutet daher vorzugsweise die isomeren Reste

$-CH_2-CHR^{3'}-$ von (iii)

und

$H_3C-CR^{3'}-$ von (iv)

und

$-CR^{4'}=CH-$ von (v)

und

$R^{4'}HC=C-$ von (vi)

(da die organischen Verbindungen (4a') bevorzugt sind, sind die isomeren Reste (iii) und (iv) bevorzugt), und f' ist daher die Gesamtzahl der C-Atome in der $H_2C=CR^{3'}$-Gruppe von (4a') oder der $R^{4'}C\equiv C$-Gruppe von (4b'). Da $R^{3'}$ und $R^{4'}$ vorzugsweise Wasserstoffatome sind, ist f' daher vorzugsweise 2.

Ein bevorzugtes Bespiel für die organische Verbindung (4a') ist die Verbindung der Formel

$$H_2C=CH-CH_2-(OCH_2CH_2)_a[OCH_2CH(CH_3)]_b[OCH_2CH(CH_2CH_3)]_c-OR^3,$$

und für den Rest $-C_{f'}H_{2f'-2k'}-Z$ in (I') sind daher bevorzugt die isomeren Reste der Formel

$$-CH_2-CH_2-CH_2-(OCH_2CH_2)_{a'}[OCH_2CH(CH_3)]_{b'}[OCH_2CH(CH_2CH_3)]_{c'}-OR^{3'},$$

$$H_3C-CH-CH_2-(OCH_2CH_2)_{a'}[OCH_2CH(CH_3)]_{b'}[OCH_2CH(CH_2CH_3)]_{c'}-OR^{3'},$$

wobei a', b', c' und $R^{3'}$ die oben dafür angegebene Bedeutung haben.

Der an die Doppel- oder Dreifachbindung gebundene Rest Z in (4a') oder (4b') ist ein Polyether. Üblicherweise werden sie durch Polymerisation von Ethylenoxid und/oder Propylenoxid und/oder Butylenoxid hergestellt, wobei die Alkylenoxideinheiten entweder statistisch verteilt oder als Blockcopolymerisate vorliegen können. Die Polyether können aus nur einem Alkylenoxid oder durch Copolymerisation aus zwei oder drei der genannten Alkylenoxide hergestellt werden. Je nach Verfahren werden dabei statistisch verteilte Copolymere oder Blockcoploymere erhalten, wobei statistisch verteilte Polyether bevorzugt sind. Die zur Herstellung der verzweigten Polyether-Polysiloxan-Copolymere (B2) verwendeten Polyether der Formel 4a und 4b weisen mindestens zwei Polyoxyalkyleneinheiten, üblicherweise nicht mehr als 200 Polyoxyalkyleneinheiten, bevorzugt nicht mehr als 150 Polyoxyalkyleneinheiten, auf.

Im zweiten Verfahrensschritt wird die organische Verbindung (4') in solchen Mengen eingesetzt, dass das Verhältnis von aliphatischer Doppelbindung in (4a') bzw. aliphatischer Dreifachbindung in (4b') zu Si-gebundenem Wasserstoff in dem im ersten Verfahrensschritt erhaltenen Zwischenprodukt (5') bevorzugt 1,05 bis 1,5 beträgt.

Der Katalysator (3') wird im zweiten Verfahrensschritt vorzugsweise in Mengen von 0,5 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht von organischer Verbindung (4') und im ersten Verfahrensschritt erhaltenes Zwischenprodukt (5') eingesetzt.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 120°C, durchgeführt.

Die verzweigten Polyether-Polysiloxan-Copolymere (B2) und deren Herstellung sind in EP 1 424 117 A2, insbesondere Seite 2, Zeile 41 bis Seite 10, Zeile 19 beschrieben.

Als verzweigte Polyether-Polysiloxan-Copolymere werden vorzugsweise Polyether-Polysiloxan-Copolymere (B3) der allgemeinen Formel

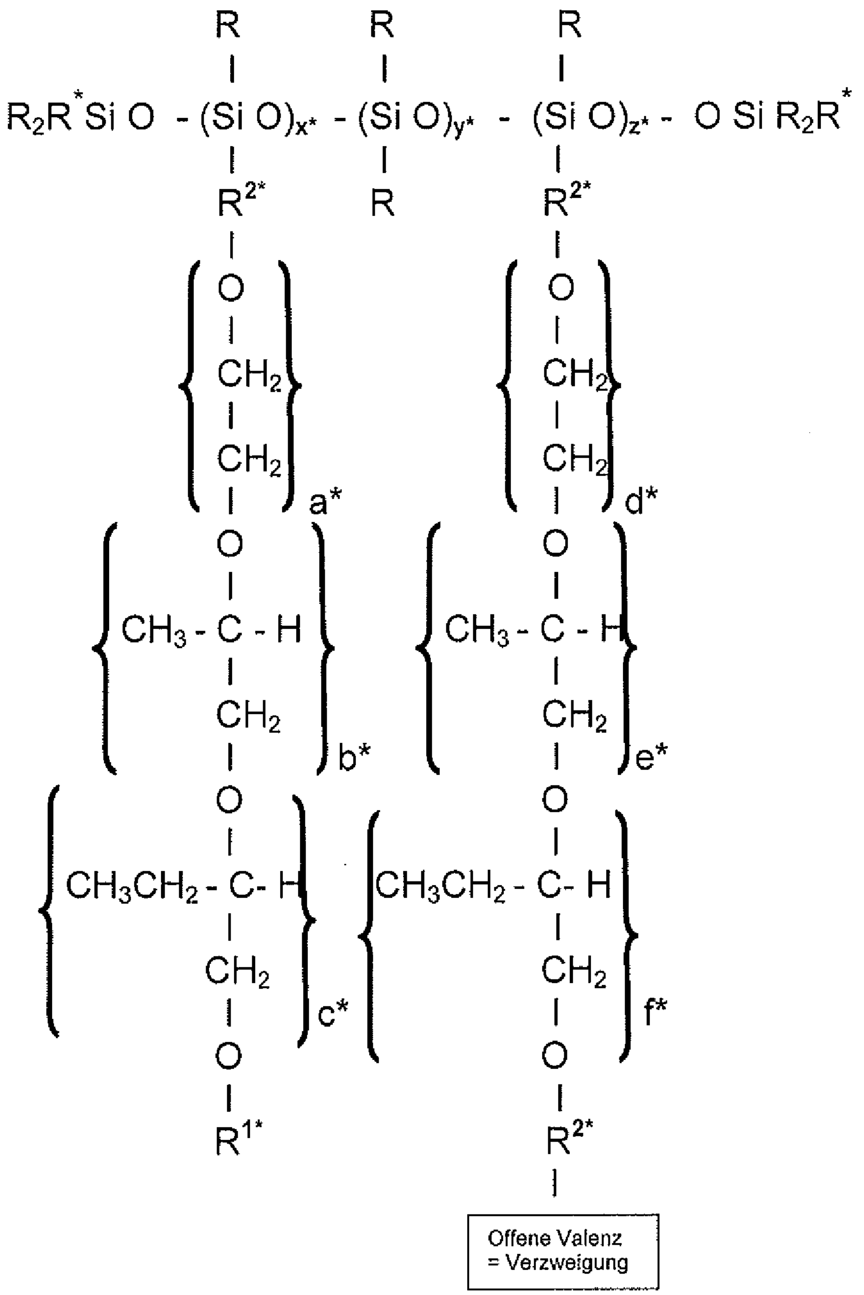


(I*),

eingesetzt,
worin R die oben dafür angegebene Bedeutung hat,
$R^*$ entweder R oder eine der Gruppierungen
$-R^{2*}-(CH_2CH_2O)_{a^*}\ [CH_2CH(CH_3)O]_{b^*}\ [H_2CH(CH_2CH_3)O]_{c^*}-OR^{1*}$ oder
$-R^{2*}-(CH_2CH_2O)_{d^*}\ [CH_2CH(CH_3)O]_{e^*}\ [H_2CH(CH_2CH_3)O]_{f^*}-R^{2*}-$
und $R^{1*}$ entweder Wasserstoff oder einen Alkyl-, Aralkyl-, Aryl-, R-C(O)-Rest bedeuten,
x* einen Wert von 0,1 bis 200,
y* einen Wert von 1 bis 1000 und
z* einen Wert von 0,01 bis 2,0 annehmen,
a*, b*, c*, d*, e* und f* Werte zwischen 0 und 1000 mit der Maßgabe annehmen, dass die Summe aus (a*+b*+c*) und die Summe aus (d*+e*+f*) einen Wert von 2 bis 2000 hat,
und $R^{2*}$ einen Alkylenrest mit 2 bis 10 Kohlenstoffatomen bedeutet und die offene Valenz wiederum mit einer der Gruppierungen

$$(R\ Si\ O)_{z*}$$
|

eines Polyether-Polysiloxan-Copolymers der allgemeinen Formel (I*) verknüpft ist.

Vorzugsweise nehmen im Polyether-Polysiloxan-Copolymer der allgemeinen Formel (I) a* und b* Werte zwischen 5 und 50, c*, d* und f* den Wert 0, e* einen Wert von 20 bis 150, x* einen Wert von 1 bis 10, y* einen Wert von 3 bis 100 und z* einen Wert von 0,5 bis 1,5 an.
R* ist vorzugsweise R.

Beispiele für Reste R sind oben beschrieben.

Die Herstellung der bei Raumtemperatur flüssigen Polyether-Polysiloxan-Copolymere der allgemeinen Formel (I*) erfolgt beispielsweise durch Umsetzung von

(ba) siliciumorganischen Verbindungen der allgemeinen Formel,

$$(R_2R^{**}SiO)_2\ (HRSiO)_{x^*+z^*}\ \{R_2SiO)_{y^*} \qquad (III^*),$$

worin R sowie x*, y* und z* die oben angegebene Bedeutung aufweisen und R** entweder R oder H bedeutet,
(bb) organischen Verbindungen der allgemeinen Formel

$$R^{1*}\text{-}O\text{-}(CH_2CH_2O)_{a^*}\ [CH_2CH(CH_3)O]_{b^*}\ [CH_2CH(CH_2CH_3)O]_{c^*}\ \text{-}R^{5*} \qquad (IV^*),$$

und
(bc) organischen Verbindungen der allgemeinen Formel

$$R^{5*}\text{-}O\text{-}(CH_2CH_2O)_{d^*}\ [CH_2CH(CH_3)O]_{e^*}\ [CH_2CH(CH_2CH_3)O]_{f^*}\ \text{-}R^{5*} \qquad (V^*),$$

worin $R^{1*}$, a*, b*, c*, d*, e* und f* die oben angegebene Bedeutung aufweisen,
$R^{5*}$ eine Alkenylgruppe der Formel $-C_{m^*}H_{(2m^*-1)}$ mit 2 bis 10 Kohlenstoffatomen ist, wobei m* einen Wert von 3 bis 10, vorzugsweise gleich 3, annimmt, bevorzugt eine Vinyl- oder Allylgruppe ist,
wobei das Verhältnis der Anzahl der Si-H Funktionen in Formel (III*) zur Anzahl der Alkenylgruppen $R^{5*}$ in den Formeln (IV*) und (V*) kleiner oder gleich 1 ist
und die Umsetzung in Gegenwart eines Hydrosilylierungsreaktionen fördernden Katalysators erfolgt.

Verbindungen der allgemeinen Formel (III*) sind fließfähige Siloxane, deren Viskosität durch die Summe der durchschnittlichen Anzahl der HRSiO- und $R_2SiO$-Gruppen im Molekül bestimmt wird. Diese Verbindungen und ihre Synthese sind allgemein bekannt. Beispielsweise können die wasserstofffunktionellen Polyorganosiloxane der allgemeinen Formel (III*) mit statistischer Verteilung der H-Si-Bindungen durch Cohydrolyse von Methylchlorsilanen, beispielsweise aus $MeSiHCl_2$, $Me_2SiHCl$, $Me_2SiCl_2$, $Me_3SiCl$ und $MeSiCl_3$ hergestellt werden. Weiterhin ist es möglich, wasserstofffunktionelle Polyorganosiloxane durch saure Äquilibrierung von Hexamethyldisiloxan und Gemischen verschiedener Cyclen, beispielsweise cyclische Methylhydrogensiloxane und cyclische Dimethylsiloxane, oder durch Äquilibrierung von linearen oligomeren und/oder polymeren Siloxanen, wobei ein Reaktionpartner seitenständige und gegebenenfalls auch endständige Si-H Gruppen aufweist, zu erhalten.

Die Summe (x*+z*) in der allgemeinen Formel (III*) nimmt beispielsweise Werte zwischen 1,1 und 202, bevorzugt zwischen 1,5 und 11,5 an. Die -HRSiO- Gruppen sind dabei statistisch über das Molekül verteilt. Der Wert für y* in der allgemeinen Formel (III*) beträgt vorzugsweise 1 bis 1000, bevorzugt 3 bis 100.

Die organischen Verbindungen der allgemeinen Formeln (IV*) und (V*) werden als Polyether oder Polyoxyalkylene bezeichnet. Diese Verbindungsgruppe ist bekannt. Üblicherweise werden sie durch Polymerisation von Ethylenoxid und/oder Propylenoxid und/oder Butylenoxid hergestellt, wobei die
Alkylenoxideinheiten entweder statistisch verteilt oder als Blockcopolymerisate vorliegen können. Die Polyether der allgemeinen Formeln (IV*) und (V*) können aus nur einem Alkylenoxid oder durch Copolymerisation aus von zwei oder drei der genannten Alkylenoxide hergestellt werden. Je nach Verfahren werden dabei statistisch verteilte Copolymere oder Blockcoploymere erhalten, wobei statistisch verteilte Polyether bevorzugt sind. Die zur Herstellung der Polyether-Polysiloxan-Copolymere (B3) verwendeten Polyether der allgemeinen Formeln (IV*) und (V*) weisen mindestens zwei Polyoxyalkyleneinheiten, üblicherweise nicht mehr als 200 Polyoxyalkyleneinheiten, bevorzugt nicht mehr als 150 Polyoxyalkyleneinheiten, auf. Der Rest $R^{1*}$ in den allgemeinen Formeln (I*) und (IV*) ist z. B. Ethyl, n-Propyl, i-Propyl, Hexyl, Decyl, Dodecyl, 2-Phenylethyl, bevorzugt Wasserstoff, Methyl, Butyl und Acetyl.

Die zur Herstellung eingesetzten Gewichtsanteile der Verbindungen (III*), (IV*) und (V*) werden in Abhängigkeit

vom gewünschten Polyether-Polysiloxan-Copolymer der allgemeinen Formel (I*) ausgewählt und erlauben dem Fachmann auf einfache Weise das durchschnittliche Molekulargewicht und die Viskosität zu kontrollieren und entsprechend den gewünschten Erfordernissen einzustellen. Die eingesetzten Gewichtsanteile an Verbindung (IV*) und Verbindung (V*) und die damit festgelegten Molekülverhältnisse bestimmen die Koeffizienten x* und z* in der allgemeinen Formel (I*).

Die Verbindungen der allgemeinen Formeln (III*), (IV*) und (V*) werden in Gegenwart von Hydrosilylierungsreaktionen fördernden Katalysatoren umgesetzt, wobei das Verhältnis der Anzahl der Si-H-Gruppen in der Verbindung der allgemeinen Formel (III*) zur Anzahl der aus den Verbindungen der allgemeinen Formeln (IV*) und (V*) stammenden terminalen Alkylengruppen kleiner oder gleich 1 ist. Sind die Verbindungen der allgemeinen Formeln (III*), (IV*) und (V*) untereinander nicht mischbar bzw. ist die Mischviskosität zu hoch, ist es sinnvoll, ein Lösemittel oder einen Lösungsvermittler einzusetzen.

Dazu werden bevorzugt aprotische Lösemittel, z. B. Benzol, Xylol oder gesättigte Kohlenwasserstoffe, insbesondere aber aromatische Lösemittel, wie Toluol, verwendet.

Beispiele für Hydrosilylierungskatalysatoren sind bei den oben genannten Katalysatoren (3) beschrieben.

Die Hydrosilylierungskatalysatoren werden in Konzentrationen von 0,1 bis 100 ppm, bevorzugt 2 bis 50 ppm, besonders bevorzugt von 4 bis 20 ppm, bezogen auf die Gesamtmenge an Ausgangsstoffen eingesetzt.

Die Temperaturen während der Herstellung der Polyether-Polysiloxan-Copolymere betragen bis zu 300°C. Temperaturen von 50 bis 120°C sind bevorzugt. Die Reaktionszeit beträgt zwischen 1 min und 20 h. Der Umsetzungsgrad kann an der Menge des basisch abspaltbaren Wasserstoffs von nicht umgesetzten Si-H-Gruppen bestimmt werden. Die Umsetzung ist abgeschlossen, wenn kein abspaltbarer Wasserstoff mehr nachweisbar ist, oder die Konzentration von restlichem Wasserstoff nicht mehr weiter vermindert werden kann.

Die Polyether-Polysiloxan-Copolymere (B3) und deren Herstellung sind in EP 1 076 073 A1, insbesondere auf Seite 2, Zeile 38 bis Seite 4, Zeile 46, beschrieben.

Entlüftung im Sinne dieser Erfindung ist ein Prozess bei dem der Gasgehalt einer Flüssigkeit, die Gas in dispergierter Form enthält, also einen Mikroschaum enthält, bei dem der Volumenanteil der Flüssigkeit höher ist als der Volumenanteil an Gas, reduziert wird.

Unter einem Verfahren zum Entlüften von Flüssigkeiten ist im Sinne dieser Erfindung insbesondere ein Verfahren zu verstehen, bei dem der Gasgehalt einer flüssigen Phase, die vorzugsweise höchstens 50 Volumen %, bevorzugt höchstens 20 Volumen %, besonders bevorzugt höchstens 10 Volumen %, Gas in dispergierter Form enthält, signifikant reduziert wird, so dass vorzugsweise ein Gasgehalt kleiner 5 Volumen %, insbesondere kleiner 2 Volumen % erreicht wird.

Ein bevorzugter Gegenstand der Erfindung ist ein Verfahren zur Entlüftung der bei der Zellstoffherstellung anfallenden Flüssigkeiten, vorzugsweise wässrigen Suspensionen.

Bei der Gewinnung von Zellstoff, welcher eine mehr oder weniger stark verunreinigte Zellulose darstellt, aus zellulosehaltigen Materialien, wie Holz, werden unterschiedliche Aufschlusslösungen eingesetzt, um die übrigen Bestandteile, wie Lignin, zu lösen. In einem anschließenden Wasch- und Siebprozess wird der anfallende Zellstoff von der Aufschlusslösung abgetrennt und gereinigt.

Das wohl wichtigste Aufschlussverfahren ist der alkalische Sulfat- oder Kraftprozess, bei dem mit einer NaOH/NaS enthaltenden Aufschlusslösung der sogenannte Sulfat- oder Kraftzellstoff gewonnen wird. Als weiteres Produkt fällt Schwarzablauge an, welche neben der Aufschlusslösung die übrigen Bestandteile des zellulosehaltigen Materials, wie Holz, enthält.

Die Anwendung der erfindungsgemäßen Siliconpolyether kann direkt oder wegen der besseren Verteilung und Handhabung als Lösung in geeigneten organischen Stoffen erfolgen oder als Emulsion erfolgen.

Geeignete organische Zusatzstoffe sind Mineralöle, native Öle, Isoparaffine, Polyisobutylene, Rückstände aus der Oxoalkoholsynthese, Ester niedermolekularer synthetischer Carbonsäuren, wie z. B. 2,2,4-Trimethyl-1,3-pentandiol-diisobutyrat, Fettsäureester, wie z. B. Dodecylpalmitat oder Isopropylmyristat, Fettalkohole, Phthalate und Ester der Phosphorsäure.

<u>Herstellung der erfindungsgemäßen Polyether-Polysiloxan-Copolymere:</u>

<u>Herstellung des Polyether-Polysiloxan-Copolymers (Polymer 1) gemäß WO 2006/128624 A1:</u>

67 g eines mit Methylgruppen terminierten Siloxans aus Dimethylsiloxy- und Hydrogenmethylsiloxyeinheiten mit einem Aktivwasserstoffgehalt von 0,133 % und einer Viskosität von 72 $mm^2/s$ (25°C) werden unter kräftigem Rühren mit 408 g eines Allylpolyethers (560 ppm $H_2O$-Gehalt) mit einem PO/EO-Verhältnis von 4,0 und einer Jodzahl von 11,2 vermischt und auf 100°C erwärmt. Durch Zugabe von 0,5 ml einer 2 %-igen Lösung von Hexachloroplatinsäure in Isopropanol wird die Hydrosilylierung gestartet, was sich in einer schwach exothermen Reaktion zeigt. Das Reaktionsgemisch wird bei 100 bis 110°C gehalten bis ein klares Copolymer erhalten wird und kein Aktivwasserstoff mehr nachweisbar ist. Das Zwischenprodukt, ein Polysiloxan mit seitenständigen Polyethergruppen, (beim Vergleichsversuch 2 als Polymer V1 getestet) hat eine Viskosität von 870 $mm^2/s$ (25°C).

Man erwärmt weiter auf 130°C und entfernt Wasserspuren bei 1 hPa. Danach werden 7 g Hexamethylendiisocyanat eindosiert und 20 Minuten lang homogenisiert. Die Isocyanatreaktion wird mit einem Tropfen Dibutylzinnlaurat (DBTL) gestartet. Nach zwei Stunden ist der NCO-Gehalt unter die Nachweisgrenze (IR: 20 ppm) gesunken, so dass 120 g eines Tensides (käuflich erhältlich unter der Bezeichnung Emulan® HE 50 bei der BASF SE, D-Ludwigshafen) eindosiert werden. Die 80 %-ige Copolymerlösung hat nach dem Abkühlen auf 25°C eine Viskosität von 2100 $mm^2/s$ und einen Urethangehalt von 0,139 mEqu./g.

Herstellung des Polyether-Polysiloxan-Copolymers (Polymer 2) gemäß EP 1 076 073 A1:

Es werden 1 mol Si-H-haltiges Siloxanpolymer der Formel $(Me_3SiO)_2(HRSiO)_5(Me_2SiO)_{50}$, 4,25 mol Monoallylpolyether der Formel $C_4H_9$-O-$(CH_2CH_2O)_{25}[CH_2CH(CH_3)O]_{25}$-$CH_2$-CH=$CH_2$ und 1 mol Diallylpolyether der Formel $CH_2$=CH-$CH_2$-O-$[CH_2CH(CH_3)O]_{130}$-$CH_2$-CH=$CH_2$ in Toluol als Lösemittel gemischt. In Gegenwart von 10 ppm (berechnet als Platin) Speier-Katalysator wird diese Mischung drei Stunden unter Rückfluss gekocht. Im Vakuum (100 Pa) wird das Lösemittel entfernt. In den erhaltenen Produkten sind weniger als 5 ppm basisch abspaltbarer Wasserstoff nachweisbar.

Herstellung des Polyether-Polysiloxan-Copolymers **(Polymer 3)** gemäß EP 1 424 117 A2:

In einem Glaskolben mit mechanischem Rührer werden 108 g 1,2,4-Trivinylcyclohexan mit 1840 g eines α,ω-Dihydrogenpoly-dimethylsiloxans mit einem Gehalt an Aktivwasserstoff (Sigebundener Wasserstoff) von 0,18 Gew.-% und einer Viskosität von 9 mPa.s bei 25°C gemischt und anschließend 1,9 g einer Lösung eines Platin-1,3-Divinyl-1,1,3,3-tetramethyldisiloxan-Komplexes in Dimethylpolysiloxan (sogenannter Karstedt-Katalysator) mit einem Pt-Gehalt von 1,0 Gew.-% zugegeben. Das Reaktionsgemisch erwärmt sich in wenigen Minuten auf ca. 80°C und wird ca. eine Stunde bei dieser Temperatur gerührt. Es wird ein verzweigtes Siloxanpolymer mit einer Viskosität von 220 $mm^2/s$ bei 25°C und einem Gehalt von Aktivwasserstoff von 0,067 Ges.-% erhalten. Dem Syntheseprinzip entsprechend bestehen sämtliche freien Siloxankettenenden aus den hochreaktiven Hydrogendimethylsiloxyeinheiten.

100 g dieses Hydrogensiloxanpolymers werden in eine 100°C warme Mischung aus 226 g eines monoallylischen Polyethers mit durchschnittlich 24 Ethylenoxy- und 25 Propylenoxygruppen der Formel $CH_2$=CH-$CH_2$-O-$(CH_2CH_2O)_{24}$-$(CH_2CH_2CH_2O)_{25}$-H und 0,3 g der in Beispiel 1 beschriebenen Karstedt-Katalysatorlösung (Pt-Gehalt = 1,0 Gew.-%) dosiert. Nach insgesamt drei Stunden Reaktionszeit ist der Aktivwasserstoff (Si-gebundene Wasserstoff) vollständig umgesetzt. Nach Abkühlen auf 25°C wird ein klares, sehr viskoses Produkt mit 18.400 mPa.s bei 25°C erhalten. Die freien Kettenenden sind mit linearen Polyetherketten modifiziert.

Vergleichspolymer (Polymer V1):

Das Polymer V1 ist die Zwischenstufe bei der Herstellung des Polymers 1. Es ist ein unverzweigtes Polysiloxan mit seitenständigen Polyethergruppen analog GB 2 350 117 A.

Siliconöl A1:

94 Teile Polydimethylsiloxan einer Viskosität von 12.500 $mm^2/s$ und 6 Teile einer hydrophilen Kieselsäure werden mit einer Kolloidmühle (Spalt 0,6 mm) dreimal homogenisiert. Durch 10-stündiges Erhitzen der Mischung auf 190°C wird die Kieselsäure in situ hydrophobiert.

Beschreibung der Entlüftungsversuche:

350ml Schwarzablauge aus dem Zellstoffprozess von Hartholz und Weichholz (hard- und softwood waren von der Fa. UPM Kymmene Oy aus Kuusankoski, Finnland) werden unter Rühren in einem Becherglas für 15 Minuten unter konstanten Bedingungen auf 80°C aufgeheizt, danach werden 220 ml davon in einen ebenfalls auf 80°C thermostatisierten Glas-Rührautoklaven überführt.

Bestimmung von $D_0$:

Der Autoklav wird ohne eine Zugabe von Entlüfter verschlossen und nach einer Wartezeit von 3 Sekunden wird das Auslassventil am Boden des Autoklaven für 5 Sekunden geöffnet.
Die Schwarzablauge wird nun unter 3 bar Druck in einen Messzylinder abgelassen und danach werden sofort die Masse und das Volumen für die Dichteberechnung bestimmt.

Bestimmung von $D_2$:

Der Autoklav wird ohne Zugabe eines Entlüfters verschlossen und die enthaltene Schwarzablauge wird unter einem Pressluft-Druck von 3 bar für 10 Minuten bei 800 UpM gerührt. Nach einer Wartezeit von 3 Sekunden wird das Auslassventil am Boden des Autoklaven für 5 Sekunden geöffnet.
Die Schwarzablauge wird nun unter 3 bar Druck in einen Messzylinder abgelassen und danach werden sofort die Masse und das Volumen für die Dichteberechnung bestimmt.

Bestimmung von $D_1$:

Der Autoklav wird nach Zugabe der in der Tabelle unten angegebenen Menge eines Entlüfters verschlossen und die enthaltene Schwarzablauge wird unter einem Pressluft-Druck von 3 bar für 10 Minuten bei 800 UpM gerührt. Nach einer Wartezeit von 3 Sekunden wird das Auslassventil am Boden des Autoklaven für 5 Sekunden geöffnet.
Die Schwarzablauge wird nun unter 3 bar Druck in einen Messzylinder abgelassen und danach werden sofort die Masse und das Volumen für die Dichteberechnung bestimmt.
$D_0$ = Dichte der Schwarzablauge bei 80°C <u>ohne</u> Entlüfter; <u>ohne</u> Rühren
$D_2$ = Dichte der Schwarzablauge bei 80°C <u>ohne</u> Entlüfter; <u>nach</u> Rühren
$D_1$ = Dichte der Schwarzablauge bei 80°C <u>mit</u> Entlüfter; <u>nach</u> Rühren

$$\text{Entlüftung in \%} = 100 \times (D_1 - D_2) / (D_0 - D_2)$$

$D_0$ (hardwood) : 1,02g/cm$^3$ und $D_2$ (hardwood) : 0,87g/cm$^3$.
$D_0$ (softwood) : 1,04g/cm$^3$ und $D_2$ (softwood) : 0,79g/cm$^3$.

**Beispiele 1 bis 3 (mit Polymer 1 bis 3),**

**Vergleichsversuch 1 (mit Polymer 1 + Siliconöl A1) und Vergleichsversuch 2 (mit Polymer V1):**

Für den Einsatz als Entlüfter werden die Polymere A1 bis A3 (Beispiele 1-3) und Polymer V1 (Vergleichsversuch 2) jeweils als 20%-ige Lösung in einem synthetischen Ester, 2,2,4-Trimethyl-1,3-pentandiol-diisobutyrat, gelöst.
Beim Vergleichsversuch 1 wird eine Entschäumerformulierung gemäß WO 2006/128624 A1, die neben dem verzweigten Polyether-Polysiloxan-Copolymer (Polymer 1) das oben beschriebene Siliconöl A1 enthält, als Entlüfter eingesetzt.
Beim Vergleichsversuch 1 enthält die 20%-ige Lösung 2% des Polymers 1 und 18% des oben beschriebenen Siliconöl A 1 (gemäß Beispiel 1 (C11) der WO 2006/128624 A1).
Die Zugabemengen der 20%-igen Lösungen bzw. des reinen Esters (als Blindprobe) in die Schwarzablauge sind in der Tabelle angegeben.
Die Ergebnisse der Prüfung der Wirksamkeit bei der Entlüftung sind in der Tabelle zusammengefasst.

**Tabelle:**

| **Beispiele/ Vergleichsversuche** | **Entlüfter** | **Zugabemenge in µl** | **Entlüftung in Schwarzablauge von Hartholz in %** | **Entlüftung in Schwarzablauge von Weichholz in %** |
|---|---|---|---|---|
| Beispiel 1 | Polymer 1 (WO2006/128624) | 20 | 61,2 | 86,0 |
| Vergleichsversuch 1 (Entschäumer) | Polymer 1 + Siliconöl A1 (WO2006/128624) | 20 | 42,8 | 63,7 |
| Beispiel 2 | Polymer 2 (EP1076073A) | 20 | 55,4 | 77,3 |
| Beispiel 3 | Polymer 3 (EP1424117A) | 20 | 53,0 | 72,2 |
| Vergleichsversuch 2 (unverzweigtes Polymer) | Polymer V1 | 20 | 42,4 | 67,0 |

(fortgesetzt)

| Beispiele/ Vergleichsversuche | Entlüfter | Zugabemenge in µl | Entlüftung in Schwarzablauge von Hartholz in % | Entlüftung in Schwarzablauge von Weichholz in % |
|---|---|---|---|---|
| *Blindprobe* | *Lösemittel: 2,2,4-Trimethyl-1,3-pentandiol-diisobutyrat* | *16* | *18,0* | *31,0* |

Wie aus der Tabelle zu entnehmen ist, ist die Entlüftung beim Vergleichsversuch 1 deutlich schlechter als beim Beispiel 1, Beim Vergleichsversuch 1 wird ein Entschäumer gemäß WO 2006/128624 A1 eingesetzt, der neben dem verzweigten Polymer 1 ein Siliconöl enthält. Der Entschäumer gemäß WO 2006/128624 A1 eignet sich somit nicht als Entlüfter. Überraschender Weise eignet sich dagegen das verzweigte Polyether-Polysiloxan-Copolymer alleine aber als Entlüfter.

Auch beim Vergleichsversuch 2 ist die Entlüftung deutlich schlechter als beim Beispiel 1, Beim Vergleichsversuch 2 wird ein unverzweigtes Polyether-Polysiloxan-Copolymer analog GB 2 350 117 A eingesetzt. Das verzweigte Polyether-Polysiloxan-Copolymer zeigt dagegen ein unerwartet besseres Ergebnis bei der Entlüftung.

**Patentansprüche**

1. Verfahren zum Entlüften von Flüssigkeitendurch Zugabe von 0,0001 bis 5,0 Gew.-%, vorzugsweise 0,0002 - 1,0 Gew.-%, besonders bevorzugt 0,001- 0,2 Gew.-%, verzweigten Polyether-Polysiloxan-Copolymeren zu diesen Flüssigkeiten, wobei als verzweigte Polyether-Polysiloxan-Copolymere solche eingesetzt werden, bei denen die Polyetherreste an lineare Siloxanketten über Kohlenwasserstoffreste SiCgebunden sind und diese Siloxanketten über SiC-gebundene, zwei- bis zehnwertige, bevorzugt zwei- bis vierwertige, Kohlenwasserstoffreste, die ein oder mehrere Heteroatome ausgewählt aus der Gruppe der Sauerstoff- und Stickstoffatome enthalten können, miteinander verbunden sind.

2. Verfahren nach Anspruch 1, **dadurch gekennzeichnet, dass** als verzweigte Polyether-Polysiloxan-Copolymere solche eingesetzt werden, bei denen die linearen Siloxanketten über seitenständige lineare oder verzweigte SiC-gebundene organische Reste, vorzugsweise lineare SiC-gebundene organische Reste, miteinander verbunden sind oder bei denen die linearen Siloxanketten endständig über verzweigte organische Reste miteinander verbunden sind.

3. Verfahren nach Anspruch 1 oder 2, **dadurch gekennzeichnet, dass** als verzweigte Polyether-Polysiloxan-Copolymere solche eingesetzt werden, bei denen die Siloxanketten über seitenständige zweiwertige SiC-gebundene Kohlenwasserstoffreste, die Polyetherreste und Urethangruppen enthalten, miteinander verbunden sind.

4. Verfahren nach Anspruch 1, 2 oder 3, **dadurch gekennzeichnet, dass** als verzweigte Polyether-Polysiloxan-Copolymere solche eingesetzt werden, die herstellbar sind, indem in einem ersten Schritt lineare Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren Verbindungen (2) der allgemeinen Formel

$$R^1\text{-}(O\text{-}C_nH_{2n})_m\text{-}A^1\text{-}H \qquad (I),$$

wobei $R^1$ einen einwertigen gegebenenfalls substituierten Kohlenwasserstoffrest bedeutet, an den Si-H-Gruppen in einer Hydrosilylierungsreaktion angelagert werden können, $A^1$ einen zweiwertigen, polaren organischen Rest ausgewählt aus der Gruppe von -O-, -NH- und -NR'- (wobei R' einen einwertigen Kohlenwasserstoffrest mit 1 bis 18 Kohlenstoffatomen bedeutet) bedeutet,
n eine ganze Zahl von 1 bis 20 ist und
m eine ganze positive Zahl ist,
umgesetzt werden,
und in einem zweiten Schritt
die so erhaltenen $H\text{-}A^1$-Gruppen aufweisenden Zwischenprodukte (4) mit organischen Verbindungen (5), die pro Molekül mindestens zwei Isocyanatgruppen aufweisen, umgesetzt werden,

mit der Maßgabe, dass der Wassergehalt der zur Herstellung der Polyether-Polysiloxan-Copolymere eingesetzten Verbindungen (1) und (2) niedriger ist als 2000 Gew.-ppm, bezogen auf das Gesamtgewicht von Verbindungen (1) und (2).

**5.** Verfahren nach Anspruch 4, **dadurch gekennzeichnet, dass** als Verbindungen (2) Polyether der allgemeinen Formel

$$H_2C=CH-R^2-(OC_nH_{2n})_m-OH \qquad (IV),$$

wobei $R^2$ ein zweiwertiger Kohlenwasserstoffrest mit 1 bis 10 Kohlenstoffatomen, bevorzugt ein Rest der Formel $-CH_2-$, $-CH(CH_3)-$ oder $-C(CH_3)_2-$ ist und
n und m die im Anspruch 4 dafür angegebene Bedeutung haben, eingesetzt werden.

**6.** Verfahren nach Anspruch 4 oder 5, **dadurch gekennzeichnet, dass** als organische Verbindungen (5) Diisocyanate der allgemeinen Formel

$$O=C=N-R^3-N=C=O \qquad (V),$$

wobei $R^3$ einen zweiwertigen Kohlenwasserstoffrest mit 4 bis 40 Kohlenstoffatomen je Rest bedeutet, eingesetzt werden.

**7.** Verfahren nach Anspruch 1 oder 2, **dadurch gekennzeichnet, dass** als verzweigte Polyether-Polysiloxan-Copolymere solche eingesetzt werden, enthaltend Strukturelemente der allgemeinen Formel

$$Y[-C_{n'}H_{2n'}-(R_2SiO)_{m'}-A'_{p'}-R_2Si-G]_{x'} \qquad (I'),$$

wobei

Y einen drei- bis zehnwertigen, vorzugsweise drei- bis vierwertigen, Kohlenwasserstoffrest, der ein oder mehrere Heteroatome ausgewählt aus der Gruppe der Sauerstoff- und Stickstoffatome enthalten kann, bedeutet,
R gleich oder verschieden sein kann und einen einwertigen gegebenenfalls halogenierten Kohlenwasserstoffrest mit 1 bis 18 Kohlenstoffatomen je Rest bedeutet,
A' einen Rest der Formel $-R_2Si-R^{2'}-(R_2SiO)_{m'}-$ bedeutet, wobei
$R^{2'}$ ein zweiwertiger Kohlenwasserstoffrest mit 2 bis 30 Kohlenstoffatomen, der durch ein oder mehrere voneinander separate Sauerstoffatome unterbrochen sein kann, bedeutet,
G einen einwertigen Rest der Formel $-C_{f'}H_{2f'-2k'}-Z$ oder einen zweiwertigen Rest der Formel $-C_{n'}H_{2n'}-$, wobei die zweite Bindung an einen weiteren Rest Y erfolgt, bedeutet,
Z einen Rest der Formel

$$-(R^{6'})_{v'}-(OCH_2CH_2)_{a'}[OCH_2CH(CH_3)]_{b'}[OCH_2CH(CH_2CH_3)]_{c'}-OR^{3'},$$

wobei

$R^{3'}$ ein Wasserstoffatom oder einen Kohlenwasserstoffrest mit 1 bis 18 Kohlenstoffatomen oder einen Rest der Formel R-C(O)- (wobei R die oben dafür angegebene Bedeutung hat) bedeutet,
$R^{6'}$ einen zweiwertigen Kohlenwasserstoffrest mit 1 bis 10 Kohlenstoffatomen bedeutet und
v' 0 oder 1 ist, und
a', b' und c' 0 oder eine ganze Zahl zwischen 1 und 1000 ist, mit der Maßgabe, dass die Summe aus (a'+b'+c') einen Wert von 2 bis 2000 hat,
x' eine ganze Zahl von 3 bis 10,
f' eine ganze Zahl von 2 bis 12 ist,
k' 0 oder 1 ist,
n' eine ganze Zahl von 2 bis 12 ist,
m' eine ganze Zahl von mindestens 1 ist,
p' 0 oder eine ganze positive Zahl ist,

mit der Maßgabe, dass die verzweigten Polyether-Polysiloxan-Copolymere durchschnittlich mindestens eine Gruppe

Z enthalten.

**8.** Verfahren nach Anspruch 1 oder 2, **dadurch gekennzeichnet, dass** als verzweigte Polyether-Polysiloxan-Copolymere solche der allgemeinen Formel

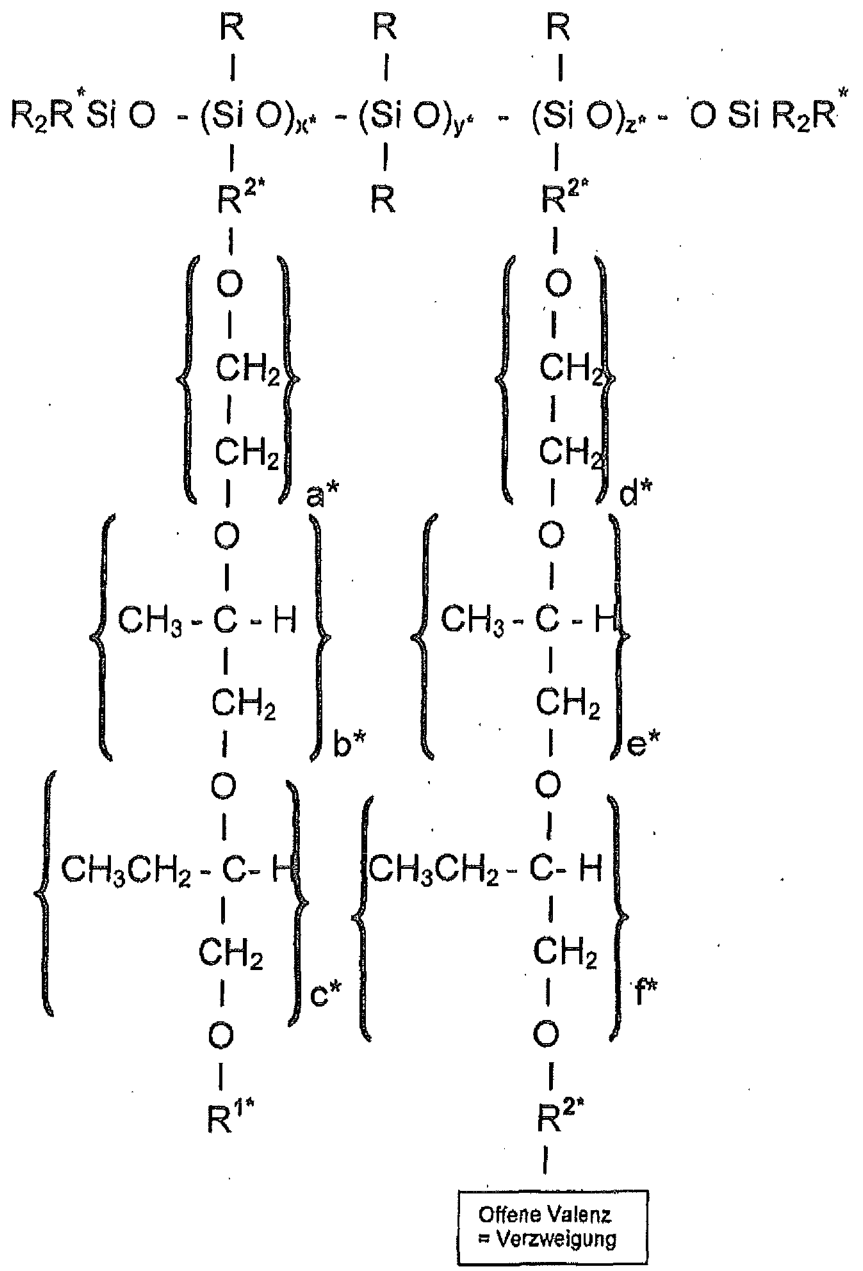


(I),

worin R unabhängig voneinander, gleiche oder verschiedene, substituierte und/oder unsubstituierte Kohlenwasserstoffreste mit 1 bis 30 Kohlenstoffatomen,
$R^*$ entweder R oder eine der Gruppierungen- $R^{2*}$-$(CH_2CH_2O)_{a^*}$ $[CH_2CH(CH_3)O]_{b^*}$ $[H_2CH(CH_2CH_3)O]_{c^*}$-$OR^{1*}$ oder -$R^{2*}$-$(CH_2CH_2O)_{d^*}$ $[CH_2CH(CH_3)O]_{e^*}$ $[H_2CH(CH_2CH_3)O]_{f^*}$-$R^{2*}$-
und $R^{1*}$ entweder Wasserstoff oder einen Alkyl-, Aralkyl-, Aryl-, R-C(O)-Rest bedeuten,
x* einen Wert von 0,1 bis 200, y* einen Wert von 1 bis 1000 und z* einen Wert von 0,01 bis 2,0 annehmen,
und a*, b*, c*, d*, e* und f* Werte zwischen 0 und 1000 mit der Maßgabe annehmen, dass die Summe aus (a*+b*+c*) und die Summe aus (d*+e*+f*) einen Wert von 2 bis 2000 hat,
und $R^{2*}$ einen Alkylenrest mit 2 bis 10 Kohlenstoffatomen bedeutet und die offene Valenz wiederum mit einer der Gruppierungen

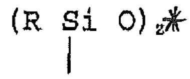

eines Polyether-Polysiloxan-Copolymers der allgemeinen Formel (I*) verknüpft ist.

9. Verfahren nach einem der Ansprüche 1 bis 8, **dadurch gekennzeichnet, dass** beim Verfahren zum Entlüften von Flüssigkeiten der Gasgehalt einer Flüssigkeit, die Gas in dispergierter Form enthält, also einen Mikroschaum enthält, bei dem der Volumenanteil der Flüssigkeit höher ist als der Volumenanteil an Gas, reduziert wird.

10. Verfahren nach einem der Ansprüche 1 bis 9, **dadurch gekennzeichnet, dass** das Verfahren zum Entlüften von bei der Zellstoffherstellung anfallenden Flüssigkeiten eingesetzt wird.

## Claims

1. Method for deaerating liquids by addition of 0.0001 to 5.0 wt%, preferably 0.0002-1.0 wt% and more preferably 0.001-0.2 wt% of branched polyether-polysiloxane copolymers to these liquids, said method comprising utilizing branched polyether-polysiloxane copolymers wherein the polyether moieties are attached to linear siloxane chains via hydrocarbon moieties in SiC bonding and these siloxane chains are connected to each other via SiC-bonded, two- to ten-valent and preferably two- to four-valent hydrocarbon moieties which may contain one or more heteroatoms selected from the group of oxygen and nitrogen atoms.

2. Method according to Claim 1, **characterized in that** the branched polyether-polysiloxane copolymers used have linear siloxane chains connected to each other via lateral linear or branched SiC-bonded organic moieties, preferably linear SiC-bonded organic moieties, or have linear siloxane chains connected to each other terminally via branched organic moieties.

3. Method according to Claim 1 or 2, **characterized in that** the branched polyether-polysiloxane copolymers used have siloxane chains connected to each other via lateral divalent SiC-bonded hydrocarbon moieties that contain polyether moieties and urethane groups.

4. Method according to Claim 1, 2 or 3, **characterized in that** the branched polyether-polysiloxane copolymers used are obtainable
by a first step of
reacting linear organopolysiloxanes (1), which have at least one Si-attached hydrogen atom and preferably at least two Si-attached hydrogen atoms per molecule, with substantially linear oligomeric or polymeric compounds (2) of the general formula

$$R^1\text{-}(O\text{-}C_nH_{2n})_m\text{-}A^1\text{-}H \qquad (I)$$

where $R^1$ is a monovalent optionally substituted hydrocarbon moiety onto which Si-H groups may be added in a hydrosilylation reaction, $A^1$ is a divalent polar organic moiety selected from the group -O-, -NH- and -NR'- (where R' is a monovalent hydrocarbon moiety with 1 to 18 carbon atoms),
n is an integer from 1 to 20, and
m is a positive integer,
and a second step of
reacting the thus obtained H-$A^1$-containing intermediates (4) with organic compounds (5) having at least two isocyanate groups per molecule,
with the proviso that the water content of said compounds (1) and (2) used for preparing the polyether-polysiloxane copolymers is less than 2000 wt ppm, based on the overall weight of compounds (1) and (2).

5. Method according to Claim 4, **characterized in that** said compounds (2) comprise polyethers of the general formula

$$H_2C{=}CH\text{-}R^2\text{-}(OC_nH_{2n})_m\text{-}OH \qquad (IV)$$

where $R^2$ is a divalent hydrocarbon moiety with 1 to 10 carbon atoms, preferably a moiety of the formula $-CH_2-$, $-CH(CH_3)-$ or $-C(CH_3)_2-$, and

n and m are each as defined in Claim 4.

6. Method according to Claim 4 or 5, **characterized in that** said organic compounds (5) comprise diisocyanates of the general formula

$$O{=}C{=}N\text{-}R^3\text{-}N{=}C{=}O \qquad (V)$$

where $R^3$ is a divalent hydrocarbon moiety having 4 to 40 carbon atoms per moiety.

7. Method according to Claim 1 or 2, **characterized in that** the branched polyether-polysiloxane copolymers used contain structural elements of the general formula

$$Y[\text{-}C_{n'}H_{2n'}\text{-}(R_2SiO)_{m'}\text{-}A'_{p'}\text{-}R_2Si\text{-}G]_{x'} \qquad (I')$$

where

Y is a three- to ten-valent and preferably three- to four-valent hydrocarbon moiety which may contain one or more heteroatoms selected from the group of oxygen and nitrogen atoms,
R in each occurrence may be the same or different and is a monovalent optionally halogenated hydrocarbon moiety having 1 to 18 carbon atoms per moiety,
A' is a moiety of the formula $-R_2Si-R^{2'}-(R_2SiO)_{m'}-$, where
$R^{2'}$ is a divalent hydrocarbon moiety which has 2 to 30 carbon atoms and which may be interrupted by one or more mutually separate oxygen atoms,
G is a monovalent moiety of the formula $-C_{f'}H_{2f'-2k'}-Z$ or a divalent moiety of the formula $-C_{n'}H_{2n'}-$, where the second bond goes to a further Y moiety, Z is a moiety of the formula
$-(R^{6'})_{v'}-(OCH_2CH_2)_{a'}[OCH_2CH(CH_3)]_{b'}[OCH_2CH(CH_2CH_3)]_{c'}-OR^{3'}$

where

$R^{3'}$ is a hydrogen atom or a hydrocarbon moiety with 1 to 18 carbon atoms or a moiety of the formula R-C(O)- (where R is as defined above),
$R^{6'}$ is a divalent hydrocarbon moiety with 1 to 10 carbon atoms,
v' is 0 or 1,
a', b' and c' are each 0 or an integer between 1 and 1000, with the proviso that the sum of (a'+b'+c') has a value of 2 to 2000,
x' is an integer from 3 to 10,
f' is an integer from 2 to 12,
k' is 0 or 1,
n' is an integer from 2 to 12,
m' is an integer of at least 1,
p' is 0 or a positive integer,

with the proviso that the branched polyether-polysiloxane copolymers contain on average at least one Z group.

8. Method according to Claim 1 or 2, **characterized in that** the branched polyether-polysiloxane copolymers used are of the general formula

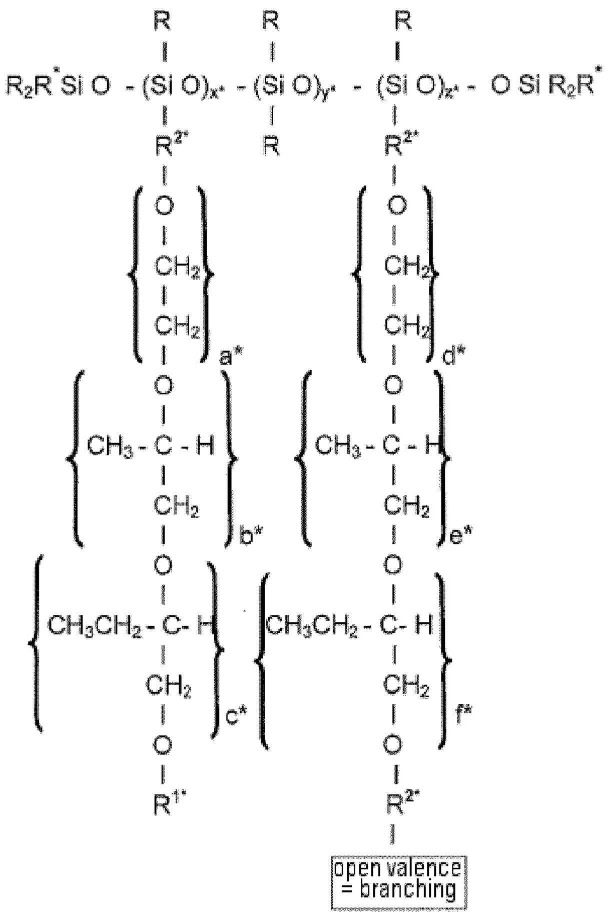 (I*),

where R in each occurrence represents identical or different, substituted and/or unsubstituted hydrocarbon moieties of 1 to 30 carbon atoms,
R* is either R or one of the groupings
$-R^{2*}-(CH_2CH_2O)_{a*}$ $[CH_2CH(CH_3)O]_{b*}$ $[H_2CH(CH_2CH_3)O]_{c*}-OR^{1*}$ or $-R^{2*}-(CH_2CH_2O)_{d*}$ $[CH_2CH(CH_3)O]_{e*}$ $[H_2CH(CH_2CH_3)O]_{f*}-R^{2*}-$
and $R^{1*}$ is either hydrogen or an alkyl, aralkyl, aryl or R-C(O) moiety,
x* is from 0.1 to 200, y* is from 1 to 1000 and z* is from 0.01 to 2.0,
and a*, b*, c*, d*, e* and f* are each between 0 and 1000 with the proviso that the sum of (a*+b*+c*) and the sum of (d*+e*+f*) is from 2 to 2000,
and $R^{2*}$ is an alkylene moiety of 2 to 10 carbon atoms and the open valence is again linked to one of the

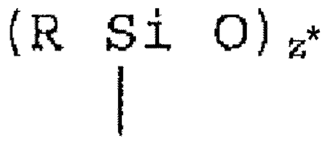

groupings of a polyether-polysiloxane copolymer of the general formula (I*).

**9.** Method according to any one of Claims 1 to 8, **characterized in that** the method for deaerating liquids reduces the gas content of a liquid which contains gas in dispersed form, i.e., which contains a microfoam where the volume fraction of liquid is higher than the volume fraction of gas.

**10.** Method according to any one of Claims 1 to 9, **characterized in that** the method is used for deaerating liquids generated in chemical-pulp production.

## Revendications

1. Procédé pour la désaération de liquides par addition de 0,0001 à 5,0% en poids, de préférence de 0,0002-1,0% en poids, de manière particulièrement préférée de 0,001-0,2% en poids, de copolymères ramifiés de polyéther-polysiloxane à ces liquides, en utilisant comme copolymères ramifiés de polyéther-polysiloxane ceux dans lesquels les radicaux polyéther sont liés par SiC à des chaînes linéaires de siloxane via des radicaux hydrocarbonés et ces chaînes siloxanes étant liées les unes aux autres via des radicaux hydrocarbonés liés par SiC divalents à décavalents, de préférence divalents à tétravalents, qui peuvent contenir un ou plusieurs hétéroatomes choisis dans le groupe formé par les atomes d'oxygène et les atomes d'azote.

2. Procédé selon la revendication 1, **caractérisé en ce qu'**on utilise comme copolymères ramifiés de polyéther-polysiloxane ceux dans lesquels les chaînes linéaires de siloxane sont liées les unes aux autres via des radicaux organiques linéaires ou ramifiés liés par SiC en position latérale, de préférence des radicaux organiques linéaires liés par SiC ou dans lesquels les chaînes linéaires de siloxane sont liées les unes aux autres en position terminale via des radicaux organiques ramifiés.

3. Procédé selon la revendication 1 ou 2, **caractérisé en ce qu'**on utilise comme copolymères ramifiés de polyéther-polysiloxane ceux dans lesquels les chaînes siloxane sont liées les unes aux autres via des radicaux hydrocarbonés liés par SiC, divalents en position latérale, qui contiennent des radicaux polyéther et des groupes uréthane.

4. Procédé selon la revendication 1, 2 ou 3, **caractérisé en ce qu'**on utilise comme copolymères ramifiés de polyéther-polysiloxane ceux qui peuvent être préparés **en ce qu'**on transforme dans une première étape
des organopolysiloxanes linéaires (1), qui présentent par molécule au moins un atome d'hydrogène lié par Si, de préférence au moins deux atomes d'hydrogène liés par Si, avec des composés oligomères ou polymères (2) dans une large mesure linéaires de formule générale

$$R^1\text{-}(O\text{-}C_nH_{2n})_m\text{-}A^1\text{-}H \qquad (I),$$

où

$R^1$ signifie un radical hydrocarboné monovalent, le cas échéant substitué, sur lequel des groupes Si-H peuvent être additionnés dans une réaction d'hydrosilylation,
$A^1$ signifie un radical organique polaire divalent choisi dans le groupe formé par -O-, -NH- et -NR'-(R' signifiant un radical hydrocarboné monovalent comprenant 1 à 18 atomes de carbone),
n vaut un nombre entier de 1 à 20 et
m vaut un nombre entier positif,

et dans une deuxième étape
les produits intermédiaires (4) ainsi obtenus, présentant des groupes H-$A^1$, sont transformés avec des composés organiques (5), qui présentent par molécule au moins deux groupes isocyanate,
à condition que la teneur en eau des composés (1) et (2) utilisés pour la préparation des copolymères de polyéther-polysiloxane soit inférieure à 2000 ppm en poids par rapport au poids total des composés (1) et (2).

5. Procédé selon la revendication 4, **caractérisé en ce qu'**on utilise comme composés (2) des polyéthers de formule générale

$$H_2C\text{=}CH\text{-}R^2\text{-} (OC_nH_{2n})_m\text{-}OH \qquad (IV),$$

$R^2$ signifiant un radical hydrocarboné divalent comprenant 1 à 10 atomes de carbone, de préférence un radical de formule $-CH_2-$, $-CH(CH_3)-$ ou $-C(CH_3)_2-$ et n et m présentent la signification indiquée pour ceux-ci dans la revendication 4.

6. Procédé selon la revendication 4 ou 5, **caractérisé en ce qu'**on utilise comme composés organiques (5) des diisocyanates de formule générale

$$O\text{=}C\text{=}N\text{-}R^3\text{-}N\text{=}C\text{=}O \qquad (V),$$

$R^3$ signifiant un radical hydrocarboné divalent comprenant 4 à 40 atomes de carbone par radical.

**7.** Procédé selon la revendication 1 ou 2, **caractérisé en ce qu'**on utilise comme copolymères ramifiés de polyéther-polysiloxane ceux contenant des éléments de structure de formule générale

$$Y[-C_{n'}H_{2n'}-(R_2SiO)_{m'}-A'_{p'}-R_2Si-G]_{x'} \qquad (I'),$$

où

Y signifie un radical hydrocarboné trivalent à décavalent, de préférence trivalent à tétravalent, qui peut contenir un ou plusieurs hétéroatomes choisis dans le groupe formé par les atomes d'oxygène et les atomes d'azote,
R peut être identique ou différent et signifie un radical hydrocarboné monovalent, le cas échéant halogéné, comprenant 1 à 18 atomes de carbone par radical,
A' signifie un radical de formule $-R_2Si-R^{2'}-(R_2SiO)_{m'}$, où
$R^{2'}$ signifie un radical hydrocarboné divalent comprenant 2 à 30 atomes de carbone, qui peut être interrompu par un ou plusieurs atomes d'oxygène séparés les uns des autres,
G signifie un radical monovalent de formule$-C_{f'}H_{2f'-2k'}-Z$ ou un radical divalent de formule $-C_{n'}H_{2n'}-$, la deuxième liaison se faisant à un autre radical Y,
Z signifie un radical de formule $-(R^{6'})_{v'}-(OCH_2CH_2)_{a'}[OCH_2CH(CH_3)]_{b'}[OCH_2CH(CH_2CH_3)]_{c'}-OR^{3'}$,

où

$R^{3'}$ signifie un atome d'hydrogène ou un radical hydrocarboné comprenant 1 à 18 atomes de carbone ou un radical de formule R-C(O)- (R présentant la signification indiquée ci-dessus pour celui-ci),
$R^{6'}$ signifie un radical hydrocarboné divalent comprenant 1 à 10 atomes de carbone et
v' vaut 0 ou 1, et
a', b' et c' valent 0 ou un nombre entier entre 1 et 1000, à condition que la somme de (a' + b' + c') présente une valeur de 2 à 2000,
x' vaut un nombre entier de 3 à 10,
f' vaut un nombre entier de 2 à 12,
k' vaut 0 ou 1,
n' vaut un nombre entier de 2 à 12,
m' vaut un nombre entier d'au moins 1,
p' vaut 0 ou un nombre entier positif,

à condition que les copolymères ramifiés de polyéther-polysiloxane contiennent en moyenne au moins un groupe Z.

**8.** Procédé selon la revendication 1 ou 2, **caractérisé en ce qu'**on utilise comme copolymères ramifiés de polyéther-polysiloxane ceux de formule générale

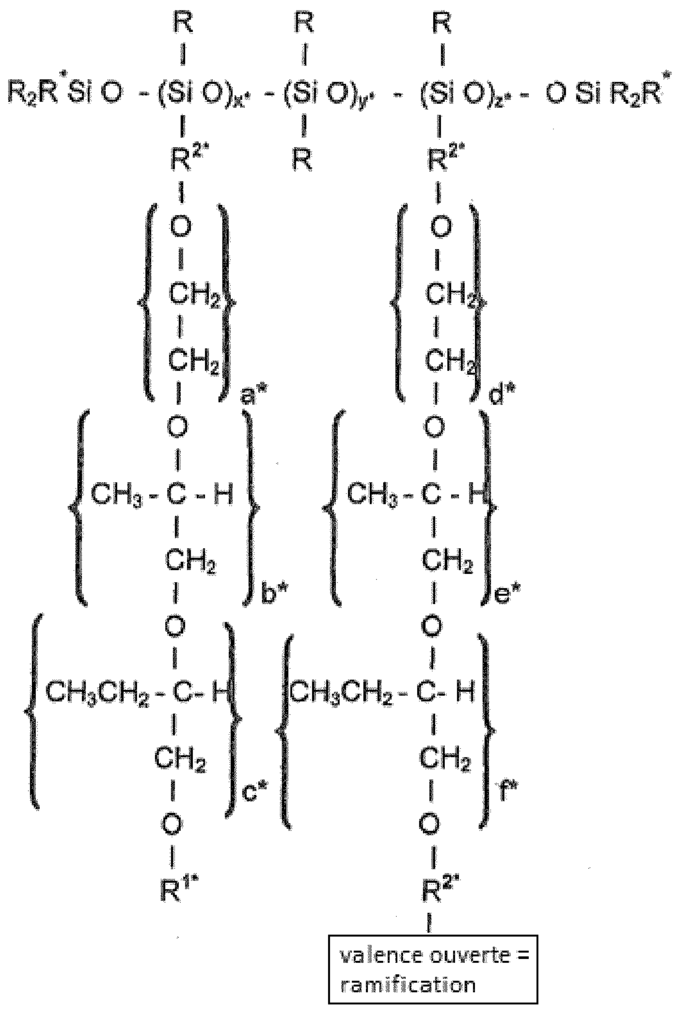


(I),

dans laquelle R signifie, indépendamment les uns des autres, des radicaux hydrocarbonés, identiques ou différents, substitués et/ou non substitués comprenant 1 à 30 atomes de carbone, R* signifie soit R, soit un des groupements

$$-R^{2*}-(CH_2CH_2O)_{a*}\ [CH_2CH(CH_3)O]_{b*}\ [H_2CH(CH_2CH_3)O]_{c*}-OR^{1*}$$

ou

$-R^{2*}-(CH_2CH_2O)_{d*}\ [CH_2CH(CH_3)O)_{e*}\ [H_2CH(CH_2CH_3)O]_{f*}-R^{2*}$-et $R^{1*}$ signifie soit hydrogène soit un radical alkyle, aralkyle, aryle, R-C(O),

x* présente une valeur de 0,1 à 200, y* présente une valeur de 1 à 1000 et z* présente une valeur de 0,01 à 2,0, et a*, b*, c*, d*, e* et f* présentent des valeurs entre 0 et 1000, à condition que la somme de (a* + b* + c*) et la somme de (d* + e* + f*) présentent une valeur de 2 à 2000,

et $R^{2*}$ signifie un radical alkylène comprenant 2 à 10 atomes de carbone et la valence ouverte est à son tour liée à un des groupements

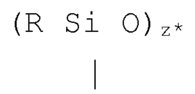

d'un copolymère de polyéther-polysiloxane de formule générale (I*).

**9.** Procédé selon l'une quelconque des revendications 1 à 8, **caractérisé en ce que**, lors du procédé pour la désaération de liquides, la teneur en gaz d'un liquide, qui contient le gaz sous forme dispersée, c'est-à-dire qui contient une micromousse dans laquelle la proportion volumique du liquide est supérieure à la proportion volumique de gaz, est

réduite.

**10.** Procédé selon l'une quelconque des revendications 1 à 9, **caractérisé en ce que** le procédé est utilisé pour la désaération de liquides produits lors de la production de cellulose.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 257356 B1
- GB 2350117 A
- WO 2006128624 A1
- EP 1424117 A2
- EP 1076073 A1
- DE 19918361 A1
- WO 2006128624 A
- EP 1076073 A
- EP 1424117 A


### In der Beschreibung aufgeführte Nicht-Patentliteratur


- *Langmuir,* 2004, vol. 20, 9463-9505
- **ADAMS, J. W. et al.** *Verfkroniek,* 1996, vol. 68 (10), 43-45